# EUROPEAN PATENT SPECIFICATION

(11) **EP 2 499 226 B1**
(45) Date of publication and mention of the grant of the patent: **03.01.2018**
(21) Application number: 10774109.2
(22) Date of filing: 04.11.2010
(51) Int. Cl.: C12C 5/00

(54) **METHOD OF IMPROVING FLAVOR STABILITY IN FERMENTED BEVERAGES**
VERFAHREN ZUR VERBESSERUNG DER GESCHMACKSSTABILITÄT BEI GEGÄRTEN GETRÄNKEN
MÉTHODE D'AMÉLIORATION DE LA STABILITÉ DE L'ARÔME DANS LES BOISSONS FERMENTÉES

(30) Priority: 11.11.2009 US 616210
(43) Date of publication of application: 19.09.2012
(73) Proprietor: Coors Brewing Company, Denver, CO 80202 (US)
(72) Inventor: LUSK, Lance, T., Milwaukee, WI 53208 (US); RYDER, David, S., Mequon, WI 53092 (US)
(74) Representative: Wynne-Jones, Lainé and James LLP
(86) International application number: PCT/US2010/055416
(87) International publication number: WO 2011/059870

(56) References cited:
- EP-A1- 1 922 933
- WO-A1-2007/082703
- WO-A1-2009/032215
- DE-A1-102007 026 975
- DE-B3-102006 018 988
- US-A1- 2003 236 202
- US-A1- 2004 161 491

## Description

### CROSS-REFERENCE TO RELATED APPLICATIONS

This application claims priority to U.S. Patent Application No. 12/616,210 filed November 11, 2009.

### STATEMENT REGARDING FEDERALLY-SPONSORED RESEARCH OR DEVELOPMENT

Not Applicable.

### FIELD OF THE INVENTION

This invention provides novel methods for stabilizing the flavor of a fermented beverage, most particularly beer, by the addition of 3,4-hydroxytryosol prior to fermentation of the beverage.

### BACKGROUND OF THE INVENTION

### I. The Brewing Process.

Fermented malt beverages such as beer are produced by boiling a warm water extract of malted barley, with or without other unmalted grains such as rice or corn, with hops, cooled, and then subjected to the fermentative action of yeast. The warm water used to extract the malt allows the action of several enzymes in the malt to hydrolyze the starch in the malted barley (and in the corn or rice) to fermentable sugars, which are acted on by the yeast to produce alcohol in the fermented malt beverage.

Barley malt is steeped with water to produce steeped out barley, which is germinated at a fairly low temperature. Germination is carried out with daily mixing and water addition as needed to maintain the moisture content at about 43%. The resulting green malt contains a high content of beer flavor precursors, beer flavor components, and coloring agents. After germination is complete, the green malt is heated at a high moisture content to generate beer flavor precursors, beer flavor components and also to reduce amylitic enzyme activity. After heating, the malt is dried to a moisture content of 3.5-5.5% and a soluble protein content of 6.5-8%. The dried malt can then be mashed to produce a wort. The wort is then boiled with hops, cooled, pitched with brewers yeast, and processed by conventional brewing processes and in conventional brewing equipment.

The malt, which may actually be a blend of malts (i.e., standard brewer's malt, high color, low amylase malt, etc.), is ground and mixed with 2.5 to 4 times its weight of warm water in large tubs and mashed at 35-40°C for 5 to 15 minutes until it forms a thick malt mash. The mash is then permitted to rest for 45-90 minutes without stirring, then heated in steps to 70-73°C while stirring, with time allowed at each step for the various enzymes to convert the starches into fermentable sugars. Following heating, the mash is held for 15-30 minutes, the temperature is raised to 75°C, and the mash is transferred to the lauter unit or a mash filter.

If rice and corn adjuncts are to be used, they are separately cooked and a cooker mash is obtained. Production of the cooker mash involves the use of adjuncts along with a 10%-30% portion of the malt (or the addition of commercial enzymes) to convert raw starch into fermentable sugars. The adjuncts and the malt portion are gradually brought to boiling and held there until the products are completely gelatinized. During the final stages of mashing (at the higher temperatures), the cooker mash and the malt mash are combined.

Mashing serves three purposes. First, it brings into solution those substances of malt (and adjuncts) which are readily soluble in warm water. Second, it permits malt enzymes to act on insoluble substances and render them soluble. Third, it provides a far-reaching enzymatic degradation of starches, proteins and gums into products of smaller size and lower molecular weight.

Lautering and Sparging. Lautering consists of the removal of the liquid, now termed the "wort," from the insoluble husks or "spent grains." Lautering begins upon termination of the mashing process, whereby the finished mash is transferred to a lautering tub. There it is allowed to rest for about ten to thirty minutes during which time the spent grains settle to the bottom. The lautering tub is equipped with a false bottom containing numerous perforations and an outlet leading to the true bottom of the tub. The mash is then allowed to settle for 10-20 minutes and run-off begun. The wort is recycled until reasonably clear. The clear wort is then pumped into a brewing kettle. Hot water is run through the spent grains to rinse out, or sparge, any remaining wort. The lauter temperature is about 72-77°C for both the bath and sparge water. The amount of sparge water used is about 50-75% of the amount of brewing water. Alternatively, a mash filter can be used to accomplish this separation of wort from the "spent grains".

Boiling and Hopping of Wort. The wort is boiled vigorously for 1-2.5 hours in the brew kettle. Hops (or extracts thereof) may be added at various stages of the boiling process, depending on the nature of the final product that is sought. Hops provide aroma and flavor, bitterness, foam and anti-microbial activity to fermented malt beverages. Hops can be extracted by supercritical/liquid CO₂ or organic solvents to produce hop extracts and remaining hop solids. Hop extracts are commercially available. The hop extract consists of alpha-acids, beta-acids, and hop oil fraction of the hop. The alpha-acids are converted into iso-alpha-acids during wort boiling to contribute bitterness to fermented malt beverages. The hop oil fraction provides some aroma to fermented malt beverages. U.S. Pat. Nos. 5,783,235 and 5,972,411 report the application of the remaining hop solids for flavoring of the fermented malt beverages.

Wort boiling provides a concentration of the sparged wort, complete inactivation of enzymes that may have survived the final mashing process, coagulation and precipitation of high-molecular weight proteins and solids (termed "kettle break" or "hot break"), extraction of desirable hop constituents and sterilization of the wort.

Cooling, Fermentation and Storage: Maturation. After boiling, the wort is strained to remove the solids, or "trub," and the wort is then cooled to a temperature of about 12-16°C. Fermentation is initiated when the wort is pitched with the proper amount of a pure brewer's yeast culture (typically about 318 - 680 grams (0.7-1.5 lb)/117 litres (bbl). After 24 hours, fermentation is established and proceeds at an accelerated rate. Fermentation typically proceeds for about 7 to 10 days. During this period, the wort temperature must be controlled, since the fermentation process causes the temperature of the wort to rise. Once the yeast has metabolized all the fermentable ingredients in the wort, it settles to the bottom and is subsequently recovered and recycled for use in pitching other brews. As the fermentation process comes to a conclusion, the temperature of the wort begins to drop. The fermented wort (termed "green beer") is drawn off for storage in a cold room tank, or "ruh," where, its temperature is lowered to about 0-5°C.

Processing and Packaging. The "ruh" beer may be allowed to remain in the ruh tank for completion of the maturation process, or it may be transferred into a separate maturation tank upon further settling of any remaining yeast and other solids. Depending on the particular brewery, the beer is allowed to age from about 14 days to about 3 months. During this period, the beer clarifies and its flavor develops. Upon maturation, the beer generally is filtered to remove the yeasts and other solids.

The beer can undergo a single- or a double-pass filtration process. The double-pass filtration consists of two steps: a primary (coarse) filtration, and a secondary (fine) filtration. Filtered beer is subsequently stored in a finishing tank.

To prepare the beer for consumption, it is carbonated to a specified level. Then, depending on the form of packaging, the beer may be pasteurized. (In the case of the cold-filtered "draft" beers, a microfiltration system is used to remove contaminants, thereby obviating the pasteurization step.) Beer packaged in cans and bottles may or may not be pasteurized depending on the brand profile, while beer packaged in kegs remains unpasteurized. After final processing of the packaged product (e.g. labeling, etc.), the beer is ready for shipment to the consumer.

Other conventional processing steps well known to those skilled in the art may be used instead of, or in addition to, the above-disclosed general brewing methods. For example, the wort may be treated with enzymes and/or the fermented wort can be diluted with water to produce a low calorie (40 or fewer calories per 355 millilitres (12 ounces)) beer. Non-alcoholic malt beverage (less than 0.5 volume percent alcohol) that closely simulates conventional beer flavor, taste and mouthfeel may be produced by a number of processes included arrested fermentation, distillation of the beer alcohol, or beer ultrafiltration.

### II. Flavor and Flavor Stability.

Malt beverages, especially beer, possess attributes, such as foam, flavor and clarity, that are discernable by the consumer. Of course, flavor is a key factor in the quality of a malt beverage. Flavor (purity) and after-taste (refreshing feeling) are typically measured within the industry as having one of the following five grades- 1: Taste is not very clean and after-taste has no refreshing feeling. 2: Taste is not clean and after-taste has almost no refreshing feeling. 3: Usual. 4: Taste is clean and after-taste has refreshing feeling. 5: Taste is very clean and after-taste has very refreshing feeling,

Sensory testing has been the traditional means available for assessing the organoleptic quality of beer. The Institute of Brewing Technology began using high performance liquid chromatography (HPLC) analyses according to e.g., Greenhoff and Wheeler, J. Inst. Brew 86:35 (1981); Strating and Drost, Dev. in Food Sci. 17:109-121 (1988). Improved methods utilizing purge and trap techniques, gas chromatography, and mass selective detection using the SIM technique were applied to establish higher capacity and better separation, determination and identification. See, e.g., Narziss et al., MBAA Tech. Q. 30:48-53 (1993). However, objective measurements of a particular quality parameter are meaningless unless they are correlated to the human response to the beverage as a whole when purchased and consumed under normal conditions.

It is important that a beer retains its original, fresh flavor and character during distribution and storage. Thus, off-flavors are a great problem for beer manufacturers and distributors. The lightstruck flavor is a well-known off-flavor formed during the storage of bottled beer, as is the off-flavor caused by contamination with microorganisms. Other off-flavors that are produced during storage are described as "papery", "cardboard-like", "oxidized", or in general, "stale". At room temperature, the stale flavor in canned or bottled beer begins to develop shortly after packaging, and gradually and continuously increases to the extent that most American manufacturers of beer recall their product from the market if it is more than about 4 months from the packaging date. Although the oxygen in a bottle or can of beer is typically consumed by the beer within 24 hours of packaging, the noticeable presence of a stale flavor generally does not appear for several weeks.

In the past, the stale flavor of oxidized malt beverages, such as beer, generally has been attributed to the combined effects of oxidation, light and heat. Most investigators have focused on methods of reducing oxidation in the finished product. For example, the present practice of delaying the staling of beer includes maintaining a low level of air (or oxygen) in the packaged beer by minimizing free head space. Modern beer-filling machines are designed to achieve very low air levels in the packaged product. Typically, the bottle is evacuated before it is filled with beer, or the air in the evacuated bottle is replaced with carbon dioxide before filling, or overfoaming the bottle is utilized to displace the head space gases with beer foam. All of these practices can produce air levels of less than 0.5 ml per 355 millilitre (12 oz.) bottle. However, even these low levels of air still allow beer to oxidize in 2-3 months.

The rate at which aged or stale off-flavor forms in beer has presented a problem to brewers for many years. The environment in which beer is stored is critical for minimizing staling. If the beer is stored at cooler temperatures, the staling process will only occur slowly; and of course, raising the temperature will increase the rate of staling. However, although beer is ideally stored at cold temperatures, maintaining a uniformly cool temperature is not always possible during transport. Given the increasing number of international beer brands, distribution distances increase, and the ability to carefully control the storage environment for beer is compromised. This is a particular problem in hot and humid countries where the temperature averages 28-38°C, even more so in those countries where modern refrigeration is not always available. Therefore, the problem of beer flavor staling is ever more evident as brewers strive to assure the quality of their product in the face of increased transportation and storage times in the global market.

Flavor stability is typically evaluated in the stored packaged product (usually at a storage temperature of 28°C for 15 days) as having one of the following five grades: 1: Significantly stale; 2: Staled; 3: Usual; 4: Fresh; and 5: Very fresh. Traditionally, those wishing to investigate the flavor stability of beer have used human sensory analysis for measuring the off flavors that may develop in beer. However, because oxidative degradation has been found to be one cause of stale flavors in beer, analytical chemical methods have been developed to evaluate the flavor stability of beer by evaluating the oxidation resistance (anti-oxidants) of beer. For instance, U.S. Pat. No. 5,811,305 describes an analytical method for evaluating flavor stability of a fermented alcoholic beverage using electron spin resonance (ESR). By investigating the formation behavior of active oxygen (or free radicals) at the start of oxidative deterioration, it is possible to accurately evaluate and predict the flavor stability of a fermented alcoholic beverage at the time it becomes a finished product.

### III. The Related Art

There have been many attempts to stabilize the flavor of fermented products. For instance, U.S. Pat. No. 6,372,269 describes stabilizing the flavor of beer by adding one or more reductase enzymes from naturally occurring sources to the fermented malt beverage. In U.S. Pat. No. 5,460,836, it is suggested that extracting and removing lipids from malt using subcritical or supercritical carbon dioxide can improve the flavor stability of malt beverages. In U.S. Pat. No. 4,911,936, it is proposed that adding yeast to a fermented beer can stabilize the flavor of malt beverages. U.S. Pat. No. 6,372,269 teaches that yeast cells that produce reductase enzymes can be added to wort during the beer making process to stabilize the flavor of beer. In "Potential Antioxidants in Beer Assessed by ESR Spin Trapping", J. Agric. Food Chem. 2000, 48, 3106-3111, July 2000, it is reported that sulfite, phenolic compounds, thiols and ascorbic acid were tested as potential antioxidants to stabilize the flavor of beer.

Another recognized technique for stabilizing beer against oxidation is to add an antioxidant such as sulfur dioxide, usually in the form of bisulfite, to the beer. Sulfite is known to have anti-oxidative activity, and has been widely used as an antioxidant in the fields of food, beverage and pharmaceuticals, and also in an alcoholic beverage. Sulfite is known to be an efficient naturally occurring antioxidant in beer and various examples of adding sulfite after brewing to improve beer stability are known to the art. Thus, it is known that sulfites can improve the shelf life in beer when added after brewing.

For example, in the case of wine that requires a long aging period, sulfite plays an important role for the preservation of its quality. It is also known that, in beer brewing, the quality preservation period corresponds to the increase in sulfite concentrations contained in the product. Thus, when the amount of sulfite in the product is increased, it is possible to prepare a product that has excellent flavor stability and a long quality preservation period.

Antioxidants such as sulfur dioxide are produced by yeast during fermentation and will combine with carbonyls to form bisulfite addition components that are hydrophilic, and thus less volatile. However, although effective, increasing the concentration of SO₂, naturally or artificially, may be commercially unacceptable. In the United States, for example, SO₂ is limited by law to less than 10 ppm, and even those low levels produce undesirable and sulfury aromas in some beers. In other countries, such as Germany, any addition of exogenous SO₂ is strictly prohibited.

Further, the effectiveness of antioxidants is greatly reduced when added to the fermentable medium prior to boiling. See, for instance, U.S. Pat. Publication No. 2004/0161491 which teaches a method for improving the flavor stability of a fermented malt beverage by the addition of a hops solid extract to a fermentable medium prior to or after fermentation. However, sulfite antioxidants have little effect in reducing the generation of free radical precursors when added during boiling. Further still, the addition of bisulfite, which works by binding to aldehydes, is not considered to be an ideal solution to stabilizing beer against oxidation. Beer is a complex product, comprising many different aldehydes (notably acetaldehyde, a normal by-product of fermentation), hence the action of a sulfite additive is often muted. The addition of other oxygen scavengers has also been tried, but with little effect on the long-term stability of the flavor in the fermented malt beverage.

Adding antioxidants such as sulfite also presents a problem to the increasing number of consumers who desire an all-natural beer product which demonstrates the above qualities yet is entirely free of artificial additives or supplements (including antioxidants). For instance, in certain countries, such as Germany, the Beer Purity Laws enacted in 1516 (the "Reinheitsgebot") limit brewing ingredients to barley malt, water, hops and yeast, and are still followed.

Adding extra ingredients to improve the stability of beer against oxidation are also known. See, for example, WO 2009/032215, which teaches adding a hydroxytyrosol-rich composition to a beverage (such as beer) after fermentation or storage to prevent undesired oxidation. WO 2009/032215 teaches methods for producing a beverage containing components that are subject to undesired oxidation, and in which such oxidation is normally inhibited by the addition to the beverage of a sulfite, by replacing at least a portion of the sulfite with an olive-derived biophenol. The olive-derived biophenol can be a hydroxytyrosol-rich composition, and can be added at levels of about 1 to 1000 ppm of hydroxytyrosol per liter of beverage such that the total sulfite in the beverage is less than about 40ppm. However, WO 2009/032215 does not teach or suggest the effectiveness of adding the hydroxytyrosol) prior to fermentation.

US2004/161491 discloses adding the antioxidants prior to fermentation, notably, prior to- or during boiling the wort, but they are not the antioxidants of the claimed invention.

In spite of all of the available art and years of research, beer flavor still goes stale. Thus, a need exists for an improved method of stabilizing the flavor of fermented products such as beer.

### SUMMARY OF THE INVENTION

This invention provides a novel method for improving the flavor stability of a fermented beverage produced from wort, the method comprising boiling a wort, adding an antioxidant to the wort before or during boiling the wort in an amount effective to stabilize flavor; and thereafter fermenting the wort to prepare a fermented malt beverage having a stable flavor wherein the fermented beverage is beer and wherein the antioxidant is obtained from olive oil, extracts of olive leaves, olive fruits, or vegetation water of olive oil production.

In one embodiment the antioxidant is a hydroxy-substituted-phenyl C₁-C₅ alkanol, a hydroxy-substituted-phenyl ethanol, or a dihydroxyphenylethanol.

In one embodiment the antioxidant is 3,4-dihydroxyphenylethanol according to the general structure (1).

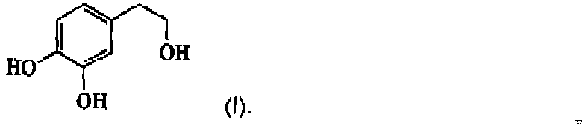

The fermentable medium is wort The antioxidant is added to the wort before or during boiling of the wort.

This disclosure has particular utility in the production of fermented malt beverages such as beer, although the invention also may be advantageously used in the production of other fermented beverages.

The present invention addresses the long-felt needs discussed above and provides a reliable and improved method of stabilizing the flavor of fermented beverage, does not significantly alter the desirable fresh flavor of the finished product, does not significantly diminish the efficiency of the brewing process, violates no law or regulation regarding the addition of additives or preservatives, and is not dependent on maintaining specific environmental conditions for the transportation and storage of the packaged product.

### DETAILED DESCRIPTION OF THE INTENTION

This invention provides a novel method for improving the flavor stability of a beer produced from wort by adding an antioxidant to the wort prior to or during wort boiling.

### I. IN GENERAL

Throughout this disclosure, various terms that are generally understood by those of ordinary skill in the applicable arts are used. In the specification and in the claims, the terms "including" and "comprising" are open-ended terms and should be interpreted to mean "including, but not limited to...." These terms encompass the more restrictive terms "consisting essentially of" and "consisting of."

As used herein and in the appended claims, the singular forms "a", "an", and "the" include plural reference unless the context clearly dictates otherwise. As well, the terms "a" (or "an"), "one or more" and "at least one" can be used interchangeably herein. It is also to be noted that the terms "comprising", "including", "characterized by" and "having" can be used interchangeably.

Unless defined otherwise, all technical and scientific terms used herein have the same meanings as commonly understood by one of ordinary skill in the art to which this invention belongs.

### II. THE INVENTION

This invention provides a novel method for improving the flavor stability of a beer made from wort by adding an antioxidant to the wort prior to or during wort boiling.

By "antioxidant" we mean a substance or nutrient capable of slowing or preventing the oxidation of other molecules. Oxidation is a chemical reaction that transfers electrons from a substance to an oxidizing agent. Oxidation reactions can produce free radicals, which start chain reactions that damage cells. When materials such as food or beverages are exposed to air, oxidative deterioration can occur. Oxidation can detrimentally effect the taste, color, and nutritional content of the food or beverage. To prevent this deterioration, compounds that prevent oxidation, antioxidants, are added to the food or beverage. Antioxidants terminate these chain reactions by removing free radical intermediates, and inhibit other oxidation reactions by being oxidized themselves. Traditionally, the antioxidants are chemically synthesized. However, the possible toxicity of these compounds has stimulated the search for natural products with antioxidant properties. Similarly, a trend in the nutritional industry is to identify natural antioxidants.

In one embodiment, the antioxidant is a hydroxy-substituted-phenyl C₁-C₅ alkanol. By "hydroxy-substituted" we mean a hydroxy (OH) group that replaces a hydrogen in a compound. By "alkanol" we mean a compound comprising an alkyl of 1 to 20 carbon atoms or more having at least one hydroxyl group substituent. Examples of alkanols include but are not limited to methanol, ethanol, 1- and 2-propanol, 1,1-dimethylethanol, hexanol, octanol and the like. Alkanols are known to those skilled in the art and many are readily available commercially.

In another embodiment, the antioxidant is a hydroxy-substituted-phenyl ethanol. In another embodiment, the antioxidant is a dihydroxyphenylethanol. In another embodiment, the antioxidant is 3,4-dihydroxyphenylethanol according to the general structure

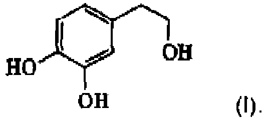

3,4-dihydroxyphenylethanol (commonly known as "hydroxytyrosol") is a naturally-occurring component of olives, olive pulp, and olive oil, and is commonly found in vegetation waters produced during processing of olive oil. Hydroxytyrosol is a known antioxidant and a potent inhibitor of metal-induced oxidation of low density lipoprotein. In addition, metal-independent oxidation is also significantly retarded by hydroxytyrosol. Hydroxytyrosol has been shown to prevent low density lipoprotein (LDL) oxidation (Visioli and Galli, 1998), platelet aggregation (Petroni et al., 1995), and inhibit 5- and 12-lipoxygenases (de la Puerta et al., 1999; Kohyama et al., 1997). Hydroxytyrosol has also been found to exert an inhibitory effect on peroxynitrite dependent DNA base modification and tyrosine nitration (Deiana et al., 1999), and it counteracts cytotoxicity induced by reactive oxygen species in various human cellular systems (Manna et al., 2000). Hydroxytyrosol has further been used as an anti-aging and dietary supplement.

In the claimed invention, hydroxytyrosol is isolated from extracts of olive leaves, olive fruits and vegetation water of olive oil production. In further embodiments of the present invention also includes hydroxytyrosol derivatives such as esters instead of hydroxytyrosol. It is also possible to use a mixture of hydroxytyrosol and hydroxytyrosol derivatives. Derivatives may be e.g. esters known to the person skilled in the art. Preferred esters of hydroxytyrosol are acetates, gucuronide conjugates and oleuropein.

In the method of the present invention the flavor of a beer is stabilized by adding the antioxidant to a wort prior to or during boiling of the wort to produce the beer. By "stabilize" or "stabilizing" we mean preserving the original, fresh flavor and character of the fermentable beverage during distribution and storage by reducing oxidation in the fermentable beverage.

By "beer" we mean any alcoholic beverage brewed from malt and hops, including ales, stouts, lagers, porters, malt liquors, low-calorie, low-alcohol and light brews and the like.

By "wort" we mean the liquor run-off after extracting a prepared solid material, such as a cereal grain or malt, with hot water.

Generally disclosed herein are methods in which the antioxidant may be added to the fermentable medium at any time prior to, or during early stages of, fermentation of the fermentable medium. By "fermentation" we mean the conversion of carbohydrates to alcohols and carbon dioxide or organic acids using yeasts, bacteria, or a combination thereof, under anaerobic conditions. For instance, the antioxidant is added to the fermentable medium before or during mashing. By "mashing" we mean the brewing process where malt or grain is crushed and steeped in hot water to make wort. The antioxidant could also be added to the fermentable medium before or during lautering. By "lautering" we mean the brewing process in which the mash is separated into the clear liquid wort and the residual grain. Lautering usually consists of three steps: mashout, recirculation, and sparging. The antioxidant could also be added to the fermentable medium before or during sparging. By "sparging" we mean the brewing process where hot water is applied to the lautered grains to rinse out any remaining wort. The antioxidant could be added to the fermentable medium before, during or after boiling of the fermentable medium. The antioxidant could also be added to the fermentable medium during early stages of fermentation of the fermentable medium. In one example embodiment, an "early stage" of fermentation is within 24 hours of the start of filling of a 5000 barrel vertical fermentation vessel.

The antioxidant may be added to the fermentable medium prior to or during boiling the wort in any amount effective to improve the flavor stability of the fermented beverage. In one embodiment, the antioxidant is added to the fermentable medium in an amount ranging from 1-1000 parts per million (ppm). In another embodiment, the antioxidant is added to the fermentable medium in an amount ranging from 1-100 ppm, or 1-10 ppm, or 2-8 ppm, or 4-7 ppm. In another embodiment, the antioxidant is added to the fermentable medium in an amount ranging from about 6 ppm.

### III. EXAMPLES

The following examples are, of course, offered for illustrative purposes only.

### Example 1.

Methods and Materials. A 6% formulation of hydroxytyrosol (HIDROX™, CreAgri, Hayward, CA) was added to the wort stream of a lager-style beer at mash-in at a rate of 100 ppm. The addition rate was based on kettle full volume, not finished beer volume. No filtration issues were observed with the 6% formulation.

Results. For the fresh beer, no significant flavor difference was found between the control and special in MillerCoors Expert Sensory Panel triangle difference testing. Significant flavor stability improvement was found with hydroxytyrosol addition throughout a 12-week, 29°C (85°F) accelerated oxidation study, as were improvements in ESR Lag Time and T150 values (Table 1). By "ESR" Lag Time we mean Electron Spin Resonance, the method known to one of skill in the art used to test for the effect of potential antioxidants present in beer. Lag Time values are partially correlated with shelf life. Higher Lag Time values indicate a longer shelf life (i.e., improved flavor stability) of the beer. By "T150" we mean the reducing power of the antioxidant on the beverage as measured by ESR. The lower the T150, the more flavor stable the beverage is.

**Table 1: ESR Results and Supporting Information**

| **Sample** | **SO₂ (ppm)** | **ESR Lag Time** | **ESR T150** | **Cu mg/L** | **Fe mg/L** |
|---|---|---|---|---|---|
| Control | 3.0 | 64 | 79528 | 0.029 | 0.025 |
| Special | 3.0 | 78 | 61454 | 0.023 | 0.000 |

A direct sensory comparison of the control and special (as reported in the art and known to one of skill) indicated that after 12 weeks, the hydroxytyrosol special had considerably less oxidation than the control. Directional, but less dramatic, improvement was noted when each of the oxidized beers was compared against its own brew that had been kept at 0°C (32°F) to maintain its freshness. This is demonstrated in Tables 2 -4 below.

**Table 2: Control vs. special sensory panel oxidation results. Oxidation was rated on a 24-point scale with a rating of "24" being extremely oxidized**

| **Week** | **Sample** | **Mean** | **F-Value** | **Level of Significance** |
|---|---|---|---|---|
| | | | | |
| 4 | Control | 6.1 | 0.10 | NSD |
| | Special | 5.8 | | |
| | | | | |
| 8 | Control | 6.9 | 5.55 | 97.3% |
| | Special | 5.3 | | |
| | | | | |
| 12 | Control | | 6.70 | 98.2% |
| | Special | 6.2 | | |

**Table 3: Control lager oxidation results comparing the beer stored at 0°C (32°F) with the beer stored at 29°C (85°F) for 4, 8, or 12 weeks.**

| **Week** | **Temp** | **Mean** | **F-Value** | **Level of Significance** |
|---|---|---|---|---|
| | | | | |
| 4 | 0°C (32°F) | 4.9 | 6.57 | 98.3% |
| | 29°C (85°F) | 6.3 | | |
| | | | | |
| 8 | 0°C (32°F) | 4.3 | 34.82 | 99.9% |
| | 29°C (85°F) | 8.1 | | |
| | | | | |
| 12 | 0°C (32°F) | 4.3 | 147.41 | 99.9% |
| | 29°C (86°F) | 9.7 | | |

**Table 4: Hydroxytyrosol special oxidation results comparing the beer stored at 0°C (32°F) with the beer stored at 29°C (85°F) for 4, 8, or 12 weeks**

| **Week** | **Temp** | **Mean** | **F-Value** | **Level of Significance** |
|---|---|---|---|---|
| | | | | |
| 4 | 0°C (32°F) | 4.2 | 22.53 | 99.9% |
| | 29°C (85°F) | 6.7 | | |
| | | | | |
| 8 | 0°C (32°F) | 4.5 | 22.26 | 99.9% |
| | 29°C (85°F) | 7.6 | | |
| | | | | |
| 12 | 0°C (32°F) | 3.9 | 60.07 | 99.9% |
| | 29°C (85°F) | 8.6 | | |

Thus, the invention provides methods for stabilizing the flavor of a fermented beverage (e.g., beer) by the addition prior to, or during an early stage of, fermentation of an antioxidant, such as an antioxidant obtained from olive oil, extracts of olive leaves, olive fruits, or vegetation water of olive oil production.

## Claims

1. A method for improving the flavor stability of a fermented beverage produced from wort, the method comprising:
boiling a wort;
adding an antioxidant to the wort before or during boiling the wort in an amount effective to stabilize flavor; and
thereafter fermenting the wort to prepare a fermented malt beverage having a stable flavor,
wherein the fermented beverage is beer, and
wherein the antioxidant is obtained from olive oil, extracts of olive leaves, olive fruits, or vegetation water of olive oil production.

2. The method of claim 1 wherein the antioxidant is a hydroxy-substituted-phenyl C₁-C₅ alkanol.

3. The method of claim 1 wherein the antioxidant is a hydroxy-substituted-phenyl ethanol.

4. The method of claim 1 wherein the antioxidant is a dihydroxyphenylethanol.

5. The method of claim 1 wherein the antioxidant is 3,4-dihydroxyphenylethanol according to the general structure

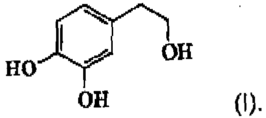

6. The method of claim 1 wherein antioxidant is added to the wort before lautering of the wort.

7. The method of claim 1 wherein the antioxidant is added to the wort in an amount ranging from 1-1000 ppm.

## Patentansprüche

1. Verfahren zur Verbesserung der Geschmacksstabilität eines fermentierten Getränks, das aus Würze hergestellt ist, wobei das Verfahren umfasst:
Kochen einer Würze;
Zusetzen eines Antioxidationsmittels zu der Würze vor oder während des Kochens der Würze in einer Menge, die zum Stabilisieren des Geschmacks effektiv ist; und
danach Fermentieren der Würze zur Herstellung eines fermentierten Malzgetränks mit einem stabilen Geschmack,
wobei das fermentierte Getränk Bier ist und
wobei das Antioxidationsmittel aus Olivenöl, Extrakten von Olivenblättern, Olivenfrüchten oder Vegetationswasser der Olivenölherstellung erhalten wird.

2. Verfahren nach Anspruch 1, bei dem das Antioxidationsmittel ein hydroxysubstituiertes Phenyl-C₁-C₅-alkanol ist.

3. Verfahren nach Anspruch 1, bei dem das Antioxidationsmittel ein hydroxysubstituiertes Phenylethanol ist.

4. Verfahren nach Anspruch 1, bei dem das Antioxidationsmittel ein Dihydroxyphenylethanol ist.

5. Verfahren nach Anspruch 1, bei dem das Antioxidationsmittel 3,4-Dihydroxyphenylethanol gemäß der allgemeinen Struktur 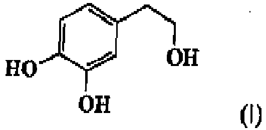 ist.

6. Verfahren nach Anspruch 1, bei dem das Antioxidationsmittel der Würze vor dem Läutern der Würze zugesetzt wird.

7. Verfahren nach Anspruch 1, bei dem das Antioxidationsmittel der Würze in einer Menge im Bereich von 1 bis 1000 ppm zugesetzt wird.

## Revendications

1. - Procédé pour améliorer la stabilité de l'arôme d'une boisson fermentée produite à partir de moût, le procédé comprenant :
porter un moût à ébullition ;
ajouter un antioxydant au moût avant ou pendant l'ébullition du moût dans une quantité efficace pour stabiliser l'arôme ; et
par la suite, fermenter le moût pour préparer une boisson maltée fermentée ayant un arôme stable,
la boisson fermentée étant de la bière, et
l'antioxydant étant obtenu à partir d'huile d'olive, d'extraits de feuilles d'olivier, d'olives, ou d'eau de végétation de la production d'huile d'olive.

2. - Procédé selon la revendication 1, dans lequel l'antioxydant est un phényl alkanol en C₁-C₅ substitué par hydroxy.

3. - Procédé selon la revendication 1, dans lequel l'antioxydant est un phényl éthanol substitué par hydroxy.

4. - Procédé selon la revendication 1, dans lequel l'antioxydant est un dihydroxyphényléthanol.

5. - Procédé selon la revendication 1, dans lequel l'antioxydant est le 3,4-dihydroxyphényléthanol selon la structure générale :

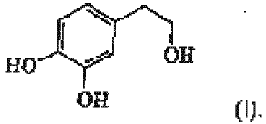

6. - Procédé selon la revendication 1, dans lequel l'antioxydant est ajouté au moût avant la filtration du moût.

7. - Procédé selon la revendication 1, dans lequel l'antioxydant est ajouté au moût dans une quantité comprise dans la plage de 1 à 1000 ppm.
